# DEMANDE DE BREVET EUROPEEN

(11) **EP 0 580 479 A1**
(43) Date de publication de la demande: **26.01.1994**
(21) Numéro de dépôt: 93401833.4
(22) Date de dépôt: 15.07.1993
(51) Int. Cl.: B62D 55/06

(54) **Engin porteur chenillé, surbaissé et à voie étroite pour travaux agricoles**

(30) Priorité: 20.07.1992 FR 9209020
(71) Demandeur: MAFROCO SARL, F-51130 Pierre Morains (FR)
(72) Inventeur: Sejourne, Michel, F-51190 Avize (FR)
(74) Mandataire: Ecrepont, Robert

(57) **Abrégé**

L'invention concerne un engin porteur chenillé, surbaissé et à voie étroite pour travaux agricoles sur plantation en ligne, notamment sur les lignes de plants de vigne.

L'énergie mécanique fournie par le moteur principal (**50**) est transmise à chacune des chenilles (**10**) par l'intermédiaire d'un embrayage, de l'arbre d'un moteur électrique, et d'une transmission à vitesse variable. Le châssis de l'engin est surmonté d'un plateau amovible (**18**), prolongé, à l'une de ses extrémités, au moins, par un dispositif de franchissement de talus constitué d'une roue (**19**), ledit plateau (**18**) supporte sur l'avant le poste de pilotage et la batterie d'accumulateur, et, à l'arrière, un dispositif (**20**) d'attelage d'une semi-remorque (**30**).

Principale application : viticulture

## Description

L'invention concerne un engin porteur chenillé, surbaissé et à voie étroite pour travaux agricoles sur plantation en ligne, notamment sur lignes de plants de vigne.

En agriculture, et tout particulièrement en viticulture, on utilisait jusqu'alors des engins, tels que des tracteurs enjambeurs, capables de mettre en oeuvre la quasi totalité des instruments aratoires et de traitement. Il s'agissait, le plus souvent, de tracteurs lourds d'assez forte puissance, à voie étroite et à châssis surélevé, présentant, par conséquent, une certaine instabilité latérale, particulièrement critique sur des terrains à forte pente. Ces tracteurs enjambeurs sont des engins lourds, de forte puissance, montés sur roues à pneus qui tassent la terre, surtout lors des traitements, qui doivent être effectués aussitôt les périodes pluvieuses, afin de réduire les développements bactériens.

Il en résultait, sur terrains en pente, une susceptibilité au ruissellement peu favorable à la pénétration de l'eau de pluie au pied des plants, donc s'opposant au développement harmonieux de ceux-ci et, par conséquent, compromettant la qualité et la quantité de la récolte. Il faut ajouter à cela que ces moyens lourds et coûteux, correspondant à une immobilisation financière élevée, avaient un taux d'utilisation assez faible, correspondant à moins de cent jours par an.

Pour pallier à cela, de petits engins spécifiques se sont développés ces dernières années, résultant notamment de l'adaptation de motoculteurs ou de petits transporteurs à chenilles, à certains travaux tels que la taille et le palissage de la vigne : tel est le cas de l'atelier automobile de palissage décrit dans le brevet français **2.561.855**, qui résulte de la combinaison d'un motoculteur, qui entraîne un compresseur d'air alimentant une cuve à pression régulée, et d'une remorque comportant deux postes de travail, en position assise, et les aménagements nécessaires au transport et à l'alimentation en air comprimé des outillages pneumatiques mis en oeuvre par les utilisateurs. L'emploi d'un tel engin est donc limité aux seuls travaux de palissage.

Plus récemment, sont apparus sur le marché divers modèles de transporteurs à chenilles en caoutchouc, destinés initialement à être utilisés comme brouette mécanique ; certains de ces transporteurs ont été adaptés, par des utilisateurs, pour le traitement de la végétation, la distribution d'engrais, l'épandage d'amendement, le rognage des sarments etc.., à telle enseigne que ces appareils, qui se transportent assez facilement d'un endroit à un autre, remplacent peu à peu, dans certaines conditions, les tracteurs qui, comme cela a été évoqué plus haut, sont à la fois encombrants, dangereux en côte et peu évolutifs par mauvais temps.

Par contre, les petits transporteurs à chenilles, ainsi utilisés pour des tâches non prévues par le constructeur, manquent de puissance pour assurer à la fois leur déplacement sur terrain en pente, la mise en oeuvre d'équipement parfois exigeant en énergie, voire transporter le conducteur, d'où la quasi obligation de leur adjoindre des moteurs auxiliaires bruyants et manquant de fiabilité pour cet usage. La vitesse de déplacement de ces petits engins chenillés, ainsi adaptés, est réduite par le fait que le conducteur se déplace à pied en suivant l'engin.

Ainsi, lorsque le transporteur chenillé est équipé d'un appareil de pulvérisation, le conducteur se déplace-t-il dans un brouillard de produits toxiques susceptible, à long terme, d'avoir des conséquences fâcheuses sur la santé ; ceci sans compter la fatigue résultant de la conduite sur terrain en pente d'un tel engin.

La présente invention a pour principal but de remédier à ces inconvénients. Cette invention, telle qu'elle se caractérise dans les revendications, résout le problème consistant à créer un petit engin porteur chenillé et surbaissé, permettant, d'une part, au conducteur d'être assis à l'avant de celui-ci et de le oonduire sans fatigue et en toute sécurité, en restant à l'écart des projec- tions de produits de traitement, ceci dans des conditions d'évolution et de stabilité parfaites et, d'autre part, d'en faciliter l'adaptation et la transfor- mation, tout en permettant à l'engin de retrouver rapidement, sur les lieux mêmes de son utilisation, sa définition de base, sans qu'il soit nécessaire de recourir à des outillages ou à des moyens de levage et de manutention, ni à aucune aide.

Les avantages obtenus, grâce à cette invention, consistent essentiellement en ceci que les travaux agricoles correspondant peuvent être effectués avec des moyens parfaitement adaptés aux besoins, dans les meilleures conditions de sécurité, avec un prix de revient assez bas et un coût d'immobilisation minimum, sans aucun gaspillage d'énergie.

D'autres caractéristiques et avantages apparaîtront dans la description qui va suivre de deux modes de réalisation de l'invention, donnés à titre d'exemple non limitatif, au regard des dessins annexés sur lesquels :
- la figure 1 représente une vue de côté d'un engin chenillé du premier mode de réalisation,
- la figure 2 représente une vue de dessus de l'engin selon la figure 1, équipé de sa semi-remorque,
- la figure 3 représente une vue de côté d'un engin dérivé d'un petit transporteur à chenilles,
- la figure 4 représente une vue de dessus de l'engin selon la figure 3,
- la figure 5 représente une vue de côté d'un engin dérivé d'un petit transporteur à chenilles, dont la roue de franchissement est directrice,
- la figure 6 représente une vue de dessus schématique d'un dispositif mécanique de commande de la variation d'entraînement des chenilles par la rotation du guidon selon la figure 5,
- la figure 7 représente une vue de dessus schématique d'un dispositif hydrostatique de commande de la variation d'entraînement des chenilles par la rotation du guidon selon la figure 5.

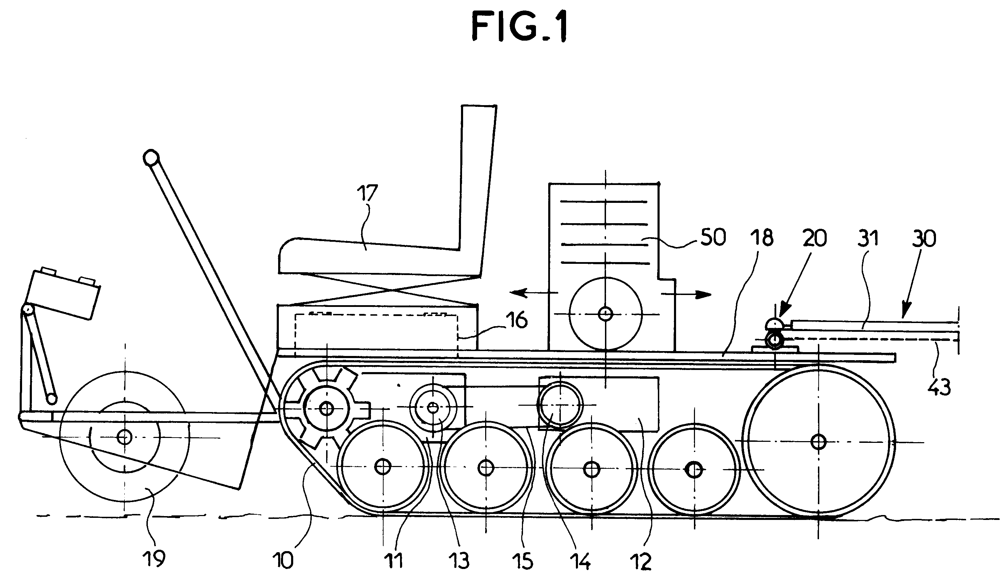

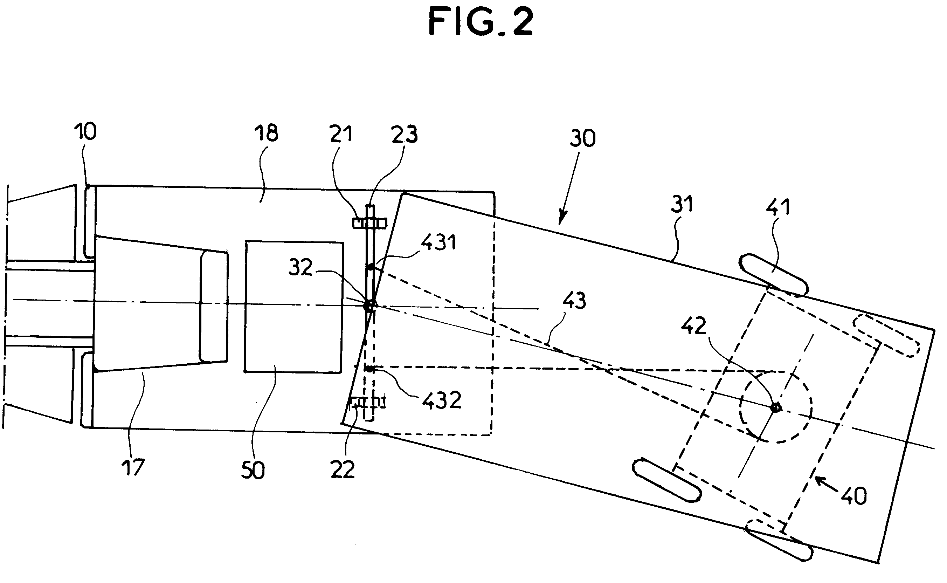

Les figures 1 et 2 représentent un engin à chenilles **10** entraînées par une boîte de vitesses **11** reliée à un moteur hydraulique **12** par des poulies **13** et **14** et une courroie **15** ; ledit moteur hydraulique **12** étant alimenté par une pompe à débit variable ; le châssis de l'engin étant surmonté d'un plateau amovible **18**, muni, sur l'avant, d'une roue de franchissement **19** et, sur l'arrière, d'un dispositif de remorquage **20**, constitué de chapes **21** et **22** reliées par une barre de liaison **23** solidarisée au châssis **31** d'une semi-remorque **30** par l'intermédiaire d'un axe de pivotement **32** ; ledit châssis **31** étant supporté par un boggie **40** à roues **41** et à axe de pivotement **42**, relié à la barre de liaison **23** par l'intermédiaire d'un câble **43** dont les extrémités **431** et **432** sont situées de part et d'autre de l'axe de pivotement **32** ; le moteur **50** étant monté réglable en position par rapport au plateau amovible **18**.

Optionnellement, la pompe à débit variable peut être entraînée par un moteur électrique alimenté par la batterie **16** située sous le siège **17**.

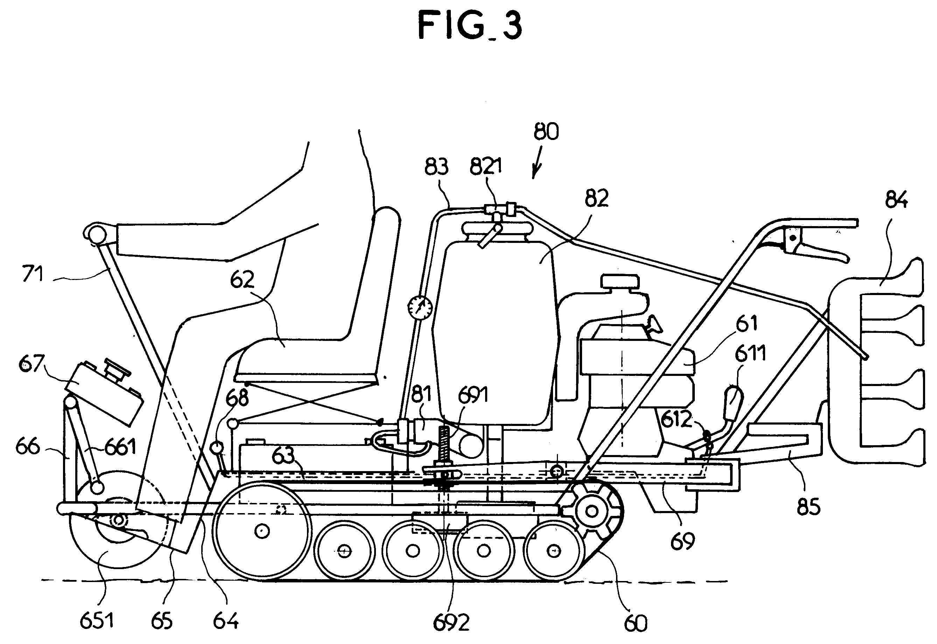

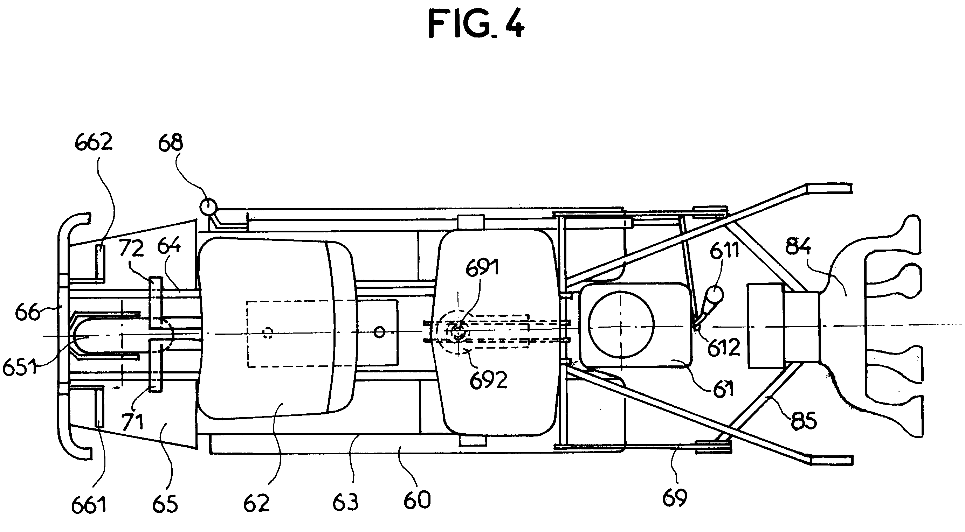

Les figures 3 et 4 représentent un engin à chenilles **60** mues par le système d'entraînement classique, existant de construction, par l'intermédiaire d'un moteur **61** commandé à partir d'un poste de conduite comportant un siège **62** fixé à l'extrémité d'un plateau amovible **63** prolongé vers l'avant par un bâti **64** muni d'un marchepied **65** encadrant une roue **651** surmontée d'un cadre **66**, supportant un pupitre de commande **67**, par rapport auquel sont articulées des pédales **661** et **662**, assurant, respectivement, le débrayage et l'accélération du moteur **61** ledit plateau amovible **63** comportant, sur un côté, un levier **68** de commande relié au levier de vitesses **611** dudit moteur **61** par l'intermédiaire d'une rotule **612** et un dispositif de relevage, constitué de deux bras **69** disposés de chaque côté du plateau **63**, reliés, par l'intermédiaire d'une traverse articulée et d'un levier, à un dispositif de manoeuvre constitué d'un système à vis et écrou **691** mû par un moto-réducteur électrique **692** ; les chenilles **60** étant commandées par des leviers de blocage **71** et **72** reliés par câble au dispositif de blocage, montés d'origine à l'extrémité opposée du châssis ; les poignées de manoeuvre desdits leviers étant munies de boutons poussoirs de commande des pompes **81** du système de traitement **80** à cuve **82**, à tuyauterie **83** et à turbine de pulvérisation **84** fixée par l'intermédiaire d'un bâti **85** à l'extrémité des bras de relevage **69**.

En examinant plus en détail les figures 1 et 2, on remarque qu'une transmission à vitesse variable confère à chaque chenille **10** la réversibilité de rotation et, par conséquent, un rayon de giration nul à l'ensemble puisqu'on ne recourt plus au débrayage de la chenille.

Le plateau amovible **18** peut recevoir, sur l'arrière, des équipements tels que cuve et atomiseur, dont le moteur d'entraînement serait remplacé par un renvoi d'angle entraîné par le moteur principal **50** par l'intermédiaire d'un système de poulies et de courroies, ou encore, par un moteur hydraulique relié à la pompe hydraulique entraînée par le moteur principal **50**.

Comme le montre plus particulièrement la figure 2, le plateau amovible **18** peut comporter un dispositif d'attelage faisant office de sellette d'attelage pour une semi-remorque **30**, elle-même dotée d'un boggie suiveur **40**.

Selon un mode de réalisation préférentiel, le transporteur, tel que décrit ci-dessus, est doté d'un ensemble moteur électrique, qui prend le relais du moteur thermique à la demande, d'un plateau porteur d'un brûleur de sarments, ou d'un broyeur, ou encore d'une presse à sarments.

Le chauffeur peut donc se rendre de son véhicule de transport à sa vigne avec l'engin, à une vitesse de l'ordre de 8 km/h. Arrivé sur son lieu de travail, il peut stopper le moteur thermique et le débrayer en même temps qu'il embraye, sur la transmission du tracteur, le moteur électrique qui va lui permettre de travailler assis, voire même à l'abri des intempéries, et ce, en silence, à une vitesse de 1 à 2 km/h ; l'alimentation du moteur électrique étant assurée par la batterie 12 ou 24 V qui équipe le tracteur et qui est rechargeable à souhait, en remettant le moteur thermique en marche, celui-ci étant équipé d'un alternateur. Les commandes de direction et d'embrayage du transporteur peuvent être dotées de commandes électriques, hydrauliques ou pneumatiques, de façon à les rendre comman- dables par un simple contacteur ou un capteur, dont on amplifierait électroniquement le signal. C'est ainsi que des palpeurs, placés sur le côté des chenilles, pourraient venir palper les pieds de vigne à 5-10 cm du sol et ordonner ainsi le changement automatique de direction du tracteur. Il en serait de même de l'avancement, qui pourrait être commandé par quelques boutons poussoirs branchés en parallèle et qui, sous l'action du pied, du coude, du genou ou de tout autre action (qui peut être télé ou radio commandée) commanderaient à l'appareil d'avancer.

Selon un mode de réalisation particulier, le poste de conduite est monté pivotant sur 90° ou 180°.

En se rapportant maintenant aux figures 3 et 4, on remarque que, dans ce mode de réalisation simplifié, utilisant un transporteur à chenilles standard, le conducteur est assis le plus bas possible, c'est pourquoi le marchepied **65** est doté d'une roue **651** de jauge, qui évite d'engager ce dernier lors du franchissement d'une butte par exemple. Le siège **17** du conducteur est basculant, de façon à accéder facilement à la batterie **16** située très bas entre les deux chenilles **10**. La cuve **82**, d'une centaine de litres, est équipée de deux pompes électriques **81** qui, étant à un niveau inférieur à la cuve, présentent l'avantage d'être toujours en charge, quel que soit le niveau de liquide dans celle-ci. Ces pompes **81** sont fixées sous la cuve **82** par l'intermédiaire d'une durite caoutchouc facilitant le démontage. Le câble électrique de chaque pompe passe à l'intérieur de la cuve **82** et ressort à l'extérieur, de part et d'autre du couvercle de celle-ci, au travers d'un presse-étoupe. A leur extrémité, les deux câbles rejoignent la même prise trois broches, ce qui rend très rapide l'enlèvement de la cuve **82**, qui est simplement posée sur un bâti et coïncée entre le siège du conducteur et le moteur **61**. Les pompes **81**, qui sont monoblocs (moteur + pompe), ont leur partie moteur immergée en permanence dans la bouillie. L'aspiration de bouillie se fait autour dudit moteur, au travers de la durite, et alimente la pompe **81** qui est, elle, située à l'air libre. L'éjection du liquide se fait dans le tube vertical **83** parallèle à la cuve **82**, au travers d'un manomètre, et va rejoindre un raccord en T, situé au-dessus de ladite cuve **82**, relié à celle-ci par une vanne **821** qui permet de régler le débit de bouillie par variation du retour en cuve, le tout lisible sur le manomètre. A la sortie du raccord en T se trouve une prise rapide pour raccorder les flexibles d'alimentation en bouillie à l'atomiseur, ou de tout autre système de pulvérisation ou d'arrosage.

Le moteur réducteur électrique **692**, situé sous le châssis, entre les chenilles **60**, commande le relevage **69** par l'intermédiaire du système à vis et écrou **691** ; il peut être avantageusement remplacé par un vérin plus performant, utilisant toutes les sources d'énergie possibles.

A l'arrière de l'engin, on trouve la turbine de pulvérisation **84** et son moteur auxiliaire, qui ont été débarrassés de la pompe piston-membrane d'origine, dont la fonction est remplacée par celle des deux pompes électriques **81**. En outre, le réservoir de carburant du moteur auxiliaire a été supprimé et est alimenté par le réservoir de l'engin, par le biais d'une prise rapide que l'on trouve sur les moteurs hors-bords des bateaux par exemple. Tout ceci confère, à cet atomiseur, un montage et un démontage très rapide.

La pédale d'embrayage **661** est montée sur le même axe qu'une roue à rochets, qui est elle même blocable par la pédale d'accélérateur **662** (pied droit du conducteur) : Les transporteurs étant équipés d'origine d'un embrayage, qui, en étant activé, dessert simultanément le frein (et vice-versa), pour des raisons de sécurité, l'embrayage doit être sollicité en permanence pour rouler. Cette sécurité a été conservée, mais l'activation permanente de l'embrayage étant fatigante, étant donné que le desserrage du frein requiert de la puissance au pied gauche, il a été rendu possible de bloquer l'embrayage-frein au travers de la roue libre avec la pédale d'accélérateur, beaucoup plus facile à actionner, l'effet roue libre permettant de pousser plus avant l'embrayage, mais l'empêchant de revenir. Il suffit donc de garder le pied sur l'accélérateur et l'avancement est possible. Dès que le conducteur lâche l'accélérateur, le moteur décélère bien , mais la roue à rochets étant libérée, si le conducteur ne maintient pas le pied gauche fermement sur l'embrayage, celui-ci et, par voie de conséquence l'engin, s'arrête et se freine de lui-même. Ainsi donc, si pour une raison qui lui échappe, le conducteur perd le contrôle de son véhicule, celui-ci stoppe de lui-même.

Le pupitre de commande **67** est doté d'un contacteur "coup de poing", destiné à couper le circuit d'allumage du moteur de l'engin par action de la main ou du pied. Deux poussoirs (montée et descente) actionnent les bras de relevage ; des interrupteurs, placés sur chaque levier de direction, activent l'une ou l'autre des pompes, par simple action du pouce.

En ce qui concerne la rapidité de démontage du plateau, celui-ci est fixé sur le châssis du transporteur par deux axes, au lieu et place de ceux qui, à l'origine, fixent le plateau du transporteur.

Par ailleurs, les câbles de commande de blocage de chaque chenille **60**, de l'embrayage-frein et de l'accélérateur, sont bouclés à leur extrémité, ce qui permet de n'avoir qu'à les glisser sur un piton pour les relier aux commandes du transporteur.

La roue qui, au travail, sert de roue de jauge, devient, lors du démontage, une roue de transport pratique pour déplacer et ranger le plateau en utilisant les bras de relevage **69** comme les manchons d'une brouette.

Le relevage **69** permet d'utiliser, à l'arrière, tous les outils dont la situation sur un axe vertical doit être contrôlée.

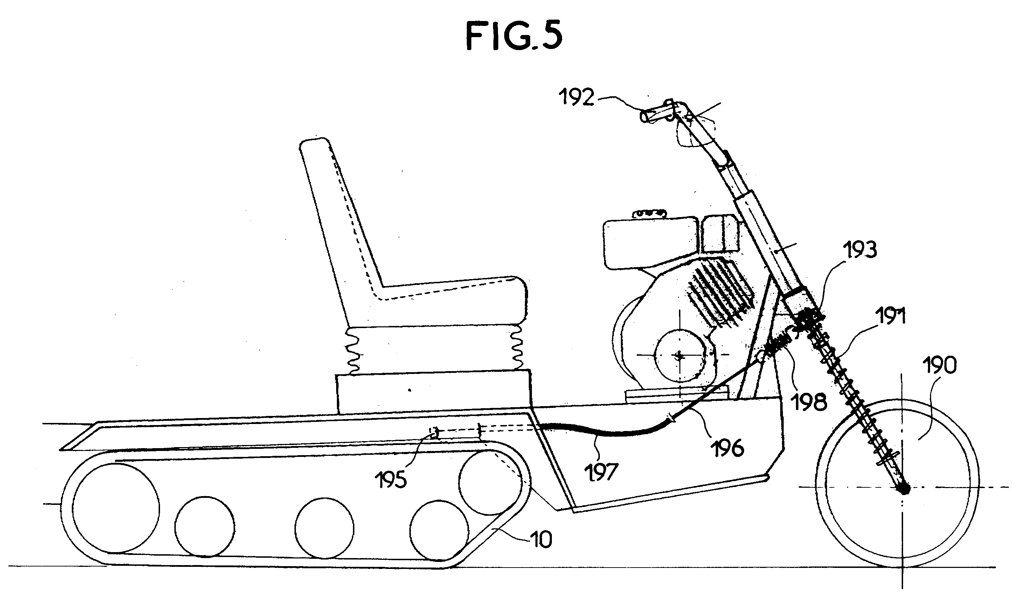

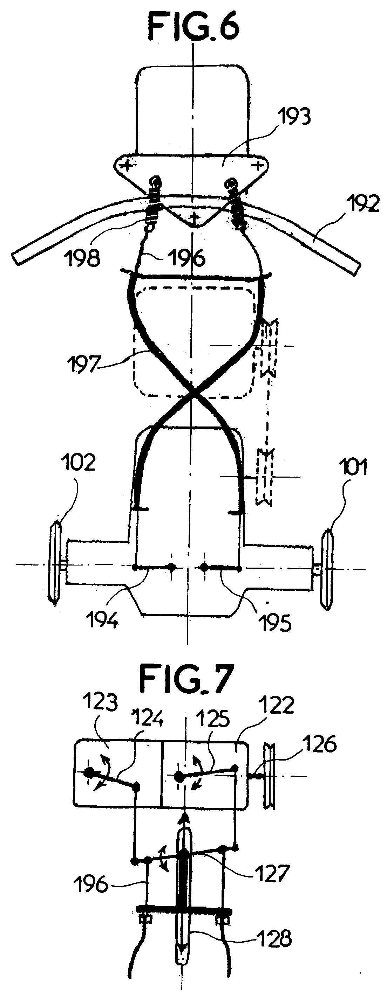

Les figures 5 à 7 représentent un engin porteur chenillé selon l'invention, dont la roue de franchissement de talus **190** est, selon un mode particulier de réalisation, rappelée en permanence vers le sol par l'intermédiaire d'une fourche télescopique **191** orientable par rapport au châssis par l'intermédiaire d'un guidon **192**, comme sur une motocyclette ; la vitesse d'entraînement de chacune des chenilles **10** étant asservie individuellement à la rotation de la fourche télescopique **191**, au-delà d'un certain débattement angulaire par rapport à une position neutre ; cet asservissement étant obtenu par l'intermédiaire d'un dispositif mécanique, comme représenté sur les figures 5 et 6, ou par l'intermédiaire d'un moyeu hydrostatique, comme représenté sur la figure 7.

En examinant plus en détail les figures 5 et 6, on remarque que la tête de la fourche télescopique **191** est équipée d'un palonnier **193**, relié aux bielles de décrabotage **194** et **195** des barbotins **101** et **102** de chacune des chenilles **10** par l'intermédiaire de câbles **196**, coulissant chacun dans une gaine **197**, et de ressorts **198**, interposés entre l'extrémité des câbles et le palonnier **193**. Par ce moyen, seul le changement de direction de la roue **190** impose à l'engin un changement de direction, en faisant varier la vitesse d'entraînement de chaque chenille par rapport à l'autre ; les ressorts **198** assurant la possibilité de poursuivre la rotation de la fourche, même lorsque les bielles de décrabotage **194** et **195** sont arrivées en butée. Ainsi, obtient-on le débrayage, puis le freinage en fin de course, de la chenille intérieure au virage, tout en accélérant la chenille extérieure au virage.

En examinant maintenant en détail la figure 7, on remarque que, dans ce mode de réalisation, correspondant à un entraînement par moteur hydraulique du barbotin des chenilles **10**, comme représenté figure 1, lesdits moteurs hydrauliques étant alimentés par des pompes à débit variable **122** et **123** couplés sur le même arbre d'entraînement **126**, les bielles de commande **124** et **125** du dispositif de variation de débit de chacune des pompes **122** et **123** sont reliées par l'intermédiaire d'un palonnier intermédiaire à un axe coulissant **127** aux câbles **196**, reliés avec interposition des ressorts **198** au palonnier **193** fixé sur la tête de la fourche **191**, après passage dans la gaine **197**, fixée au châssis, comme dans le mode de réalisation correspondant à la figure 6, avec pour différence que, dans ce cas, le coulissement de l'axe du palonnier intermédiaire **127** dans sa glissière **128** permet d'obtenir une variation collective de la vitesse d'entraînement des chenilles, en combinaison avec la variation individuelle de cette vitesse d'entraînement lorsque le déplacement doit être effectué en virage. Dans la version où la roue **190** de franchissement est en contact avec le sol, celle-ci peut dans le mode de réalisation hydrostatique être entraînée par un moteur hydraulique (non représenté).

L'engin selon l'invention est destiné, principalement, à la viticulture, mais il pourrait aussi être utilisé dans d'autres domaines, tels que les travaux publics, sous réserve d'adaptations mineures.

## Revendications

1. Engin porteur chenillé, surbaissé et à voie étroite pour travaux agricoles sur plantation en ligne, notamment sur les lignes de plants de vigne, caractérisé en ce que l'énergie mécanique fournie par le moteur principal (**50,61**) est transmise à chacune des chenilles par l'intermédiaire d'un embrayage, de l'arbre d'un moteur électrique et d'une transmission à vitesse variable, en ce que le châssis de l'engin est surmonté d'un plateau amovible (**18,63**), prolongé, à l'une de ces extrémités au moins, par un dispositif de franchissement de talus, et en ce que ledit plateau (**18,63**) supporte, sur l'avant, le poste de pilotage et la batterie d'accumulateur et, à l'arrière, un dispositif d'attelage d'une semi-remorque, ainsi qu'un dispositif de relevage.

2. Engin selon la revendication 1, caractérisé en ce que la transmission à vitesse variable est constituée de deux pompes hydrauliques à débit variable, alimentant, chacune, un moteur hydraulique assurant l'entraîne- ment de l'une des chenilles.

3. Engin selon la revendication 1, caractérisé en ce que la transmission à vitesse variable est constituée d'une pompe hydraulique à débit variable et d'un moteur hydraulique entraînant une boîte de vitesses.

4. Engin selon la revendication 1, caractérisé en ce que la transmission à vitesse variable est constituée d'un moteur hydraulique (**12**) et d'une boîte de vitesses (**11**), reliés par poulies (**13,14**) et courroies (**15**).

5. Engin selon la revendication 1, caractérisé en ce que le dispositif de franchissement de talus est constitué d'au moins une roue (**19**).

6. Engin selon la revendication 5, caractérisé en ce que au moins une roue (**190**) est rappelée en permanence vers le sol par l'intermédiaire d'une fourche télescopique (**191**), orientable par l'intermédiaire d'un guidon (**192**).

7. Engin selon la revendication 6, caractérisé en ce que la vitesse d'entraînement de chacune des chenilles (**10**) est asservie individuellement à la rotation de la fourche au-delà d'un certain développement de celle-ci par rapport à une position neutre.

8. Engin selon la revendication 7, caractérisé en ce que l'asservissement de la vitesse de rotation de chacune des chenilles à la rotation de la fourche (**191**) est obtenue par l'intermédiaire d'un câble (**196**), coulissant dans une gaine (**197**) fixée au châssis, dont l'une des extrémités est reliée, avec interposition d'un ressort (**198**), à un palonnier (**193**), solidaire de la fourche (**191**), et dont l'autre extrémité est reliée à la bielle de décrabotage (**194** **ou** **195**) des barbotins d'entraînement (**101 ou 102**) de la chenille concernée.

9. Engin selon la revendication 7, caractérisé en ce que l'asservissement de la vitesse de rotation de chacune des chenilles (**10**) à la rotation de la fourche (**191**) est obtenue par l'intermédiare d'un câble (**196**), coulissant dans une gaine (**197**) fixée au châssis, dont l'une des extrémités est reliée, avec interposition d'un ressort (**198**), à un palonnier (**193**), solidaire de la fourche (**191**), et dont l'autre extrémité est reliée par l'intermédiaire d'un palonnier à axe coulissant (**127**) à la bielle de commande (**124, 125**) du dispositif de variation de débit d'une pompe hydraulique à débit variable (**122, 123**) alimentant le moteur hydraulique d'entraînement du barbotin de la chenille concernée.

10. Engin selon la revendication 9, caractérisé en ce que la position du palonnier coulissant intermédiaire (**127**) est asservie d'une commande de variation collective de la vitesse d'entraînement des chenilles.

11. Engin selon la revendication 1, caractérisé en ce que le dispositif d'attelage d'une semi-remorque est constitué de chapes, fixées sur les côtés et sur le dessus du plateau, et d'une barre de liaison articulée par rapport à un axe situé à l'extrémité avant du châssis de la semi-remorque.

12. Engin selon la revendication 11, caractérisé en ce que la semi-remorque repose sur un boggie articulé (**40**), relié à la barre de liaison (**23**) par un câble croisé (**43**), dont les extrémités sont fixées à ladite barre de liaison (**23**) de part et d'autre de l'axe de pivotement (**32**) et à égale distance de celui-ci.

13. Engin selon la revendication 12, caractérisé en ce que le boggie (**40**) est chenillé.

14. Engin selon la revendication 1, caractérisé en ce que le dispositif de relevage est constitué de deux bras (**69**), disposés de chaque côté du plateau (**63**), reliés, par l'intermédiaire d'une traverse articulée et d'un levier, à un dispositif de manoeuvre constitué d'un système à vis et écrou (**691**) mû par un moto-réducteur électrique (**692**).
